# EUROPÄISCHE PATENTSCHRIFT

(11) **EP 2 590 000 B1**
(45) Veröffentlichungstag und Bekanntmachung des Hinweises auf die Patenterteilung: **14.05.2014**
(21) Anmeldenummer: 12191155.6
(22) Anmeldetag: 02.11.2012
(51) Int. Cl.: G02B 23/02, G02B 27/00

(54) **Bildumkehrsystem**
Image reversing system
Système de retournement d'image

(30) Priorität: 04.11.2011 DE 102011117702
(43) Veröffentlichungstag der Anmeldung: 08.05.2013
(73) Patentinhaber: Leica Camera AG, 35606 Solms (DE)
(72) Erfinder: Kammans, Sigrun, 35745 Herborn (DE)
(74) Vertreter: Stamer, Jan

(56) Entgegenhaltungen:
- DE-A1- 19 747 772
- US-A- 5 838 504

## Beschreibung

Die Erfindung betrifft ein Bildumkehrsystem mit den Merkmalen des Oberbegriffs des Anspruchs 1.

Ein solches Bildumkehrsystem ist als Teil eines optischen Systems für ein terrestrisches Fernrohr aus DE 197 47 772 A1 bekannt. Das bekannte Umkehrsystem verringert in vorteilhafter Weise nicht nur Arbeitsaufwand für dessen Herstellung und Einbau, sondern auch die Kosten der Herstellung und des Gewichts des Umkehrsystems.

Der dem Objektiv in Lichtrichtung nachgeordnete Planspiegel ist zu der optischen Achse des Objektivs schräg gestellt und diese kreuzend angeordnet. Das an dem Planspiegel reflektierte Lichtbüschel tritt in die Basisfläche eines den Planspiegel teilweise überragenden Dachkantprismas ein und wird an den Dachflächen bildumkehrend in Richtung der Basisfläche reflektiert und tritt von dort durch die Giebelfläche des Dachkantprismas aus. Das Dachkantprisma ist so ausgebildet und gegenüber dem Planspiegel so ausgerichtet, dass die optische Achse des Objektivs nach der Reflektion an dem Planspiegel senkrecht in die Basisfläche eintritt und nach Reflektion an der Dachkante und der Basisfläche ebenfalls senkrecht aus der Giebelfläche austritt. Die Richtung der optischen Achse des aus dem Dachkantprisma austretenden Lichtbüschels stimmt mit der Richtung der optischen Achse des nachfolgenden Okulars überein. Zwischen den beiden optischen Achsen kann ein Parallelversatz entstehen.

Das Objektiv erzeugt in Lichtrichtung vor dem Okular ein seitenrichtiges, aber auf dem Kopf stehendes Zwischenbild eines Objektes. Das Zwischenbild wird durch das Okular aufgerichtet und kann mit dem Auge eines Beobachters betrachtet werden.

Zur Unterdrückung von Lichtstrahlen, die aus einer Richtung außerhalb eines dem Objektiv zugeordneten Aufnahmebildwinkels in ein Abbildungssystem eintreten und zu Bildstörungen führen (Falschlicht) können kreisrunde Blenden vor und hinter das Umkehrsystem sowie vor und hinter Prismen-Ein- und -Austrittsflächen eingebaut sein.

Bei dem vorstehend beschriebenen Umkehrsystem ist es jedoch möglich, dass Falschlicht auf direktem Wege vom Objektiv durch das Dachkantprisma hindurch und weiter durch das Okular zum Auge des Betrachters gelangen kann, ohne den Planspiegel zu berühren und von anderen Blenden abgeschattet zu werden. Das führt zu unerwünschten Bildaufhellungen und Farbfehlern im betrachteten Bild.

Der Erfindung lag daher die Aufgabe zugrunde, bei dem bekannten Umkehrsystem den Einfluss von solchem Falschlicht zu vermeiden.

Diese Aufgabe wird bei einem Umkehrsystem der eingangs genannten Art erfindungsgemäß durch die kennzeichnenden Merkmale des Anspruchs 1 gelöst. Vorteilhafte Weiterbildungen ergeben sich aus den Merkmalen der Unteransprüche.

In der Zeichnung ist ein Ausführungsbeispiel des erfindungsgemäßen Umkehrsystems schematisch dargestellt und wird nachfolgend anhand der Figuren näher beschrieben. Dabei zeigen:
- Fig.1: einen Querschnitt und
- Fig.2: eine Schrägansicht des Umkehrsystems.

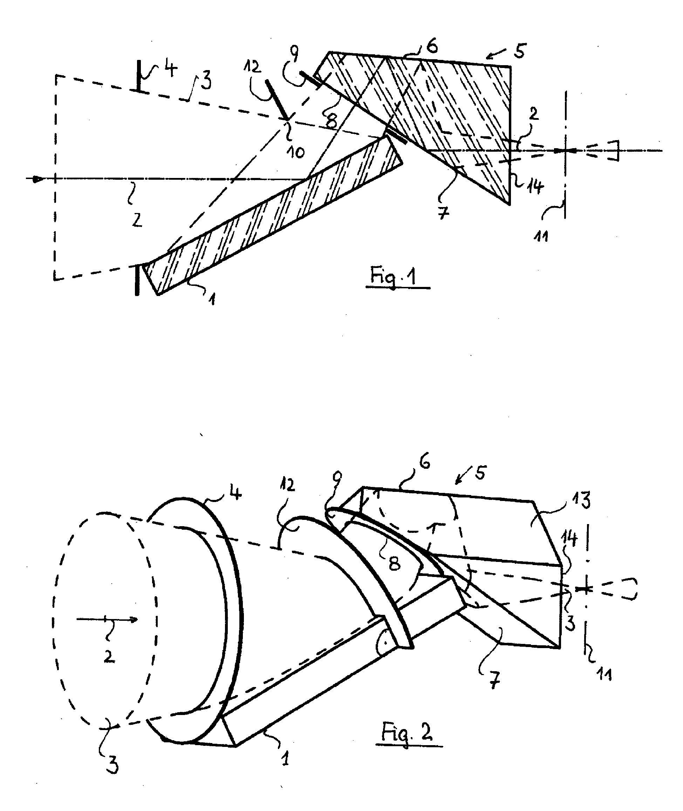

Fig. 1 zeigt einen Planspiegel 1, der schräg im Abbildungsstrahlengang eines nicht weiter dargestellten Objektivs angeordnet ist. Der Planspiegel 1 kreuzt die optische Achse 2 des Objektivs. Die Fläche des Planspiegels 1 wird von einem Strahlenbündel 3 ausgeleuchtet, das die vom Objektiv aufgenommenen Abbildungsstrahlen für ein Objekt enthält. Das Strahlenbündel 3 wird lichteintrittsseitig durch eine erste Blende 4 begrenzt, die die für die geometrisch-optische Abbildung notwendigen Abbildungsstrahlen in das Umkehrsystem eintreten lässt und störende Lichtstrahlen, die von außerhalb des Nutzstrahlenganges kommen, ausblendet.

Dem Planspiegel 1 nachgeordnet ist ein Dachkantprisma 5 mit einer Dachkante 6. Die Dachkante 6 liegt einer Basisfläche 7 gegenüber und läuft auf die Basisfläche 7 zu. An dieser Seite überragt das Dachkantprisma 5 mit der Basisfläche 7 den Planspiegel 1. Der den Planspiegel 1 überragende Teil 8 der Basisfläche 7 dient als Lichteintrittsfläche für das am Planspiegel 1 reflektierte Strahlenbündel 3. Das eintretende Strahlenbündel (3) wird durch eine zweite Blende 9 begrenzt, die Störlicht, das z.B. durch Reflexion an Fassungsteilen oder an Prismenseitenflächen entsteht, zusätzlich ausblendet.

Das auf den Planspiegel 1 einfallende und das an diesem reflektierte Strahlenbündel 3 schneiden einander, wobei sich eine engste Einschnürung 10 mit geringstem Abstand zum Planspiegel 1 ergibt. Durch die erste Blende 4 hindurchtretende Lichtstrahlen, die nicht zum geometrisch-optischen Strahlenbündel 3 zur Objektabbildung gehören (Falschlicht), können ohne Berührung des Planspiegels 1 an der engsten Einschnürung 10 vorbei direkt in das Dachkantprisma 5 eintreten und gelangen in die Zwischenbildebene 11. Um das zu vermeiden, wird erfindungsgemäß vorzugsweise in den Bereich der engsten Einschnürung 10 eine zusätzliche Blende 12 eingesetzt. Die Öffnung der Blende 12 ist an den Durchmesser der sich schneidenden Strahlenbündel 3 angepasst. Bei einem Schnitt durch das Strahlenbündel 3 an der Planspiegelfläche ergibt sich eine ovale Reflektionsfläche und eine im Querschnitt bogenförmig oval begrenzte Querschnittsfläche des an der Planspiegelfläche 1 reflektierten Strahlenbündels. Vorzugsweise wird die Blende 12 senkrecht zur Planspiegelfläche ausgerichtet.

Aus der in Fig. 2 dargestellten Schrägansicht des Umkehrsystems sind die kreisförmigen Öffnungen der Blenden 4 und 9 und die von der Begrenzung der Reflektionsfläche des Strahlenbündels 3 auf der Planspiegelfläche ausgehende oval-bogenförmige Öffnung der zusätzlichen Blende 12 zu entnehmen. Am Umkehrprisma 5 sind eine der Dachflächen 13 und die Giebelfläche 14 zu erkennen, aus der das das Objekt abbildende Strahlenbündel 3 austritt.

### Bezugszeichenliste

- 1: Planspiegel
- 2: optische Achse Objektiv
- 3: Strahlenbündel
- 4: erste Blende
- 5: Dachkantprisma
- 6: Dachkante
- 7: Basisfläche
- 8: Teil der Basisfläche
- 9: zweite Blende
- 10: engste Einschnürung
- 11: Zwischenbildebene
- 12: zusätzliche Blende
- 13: Dachfläche
- 14: Giebelfläche

## Patentansprüche

1. Bildumkehrsystem zur Einfügung in den Abbildungsstrahlengang zwischen einem Objektiv und einem Okular, wobei das Bildumkehrsystem in Lichtrichtung aus einem schräg im Abbildungsstrahlengang stehenden Planspiegel (1) und einem Dachkantprisma (5) besteht, **dadurch gekennzeichnet, dass** auf dem Planspiegel (1) im Bereich der sich einander schneidenden einfallenden und nach Reflektion ausfallenden Lichtbündel (3) des Abbildungsstrahlenganges eine senkrecht auf der Planspiegelfläche stehende, die Lichtbündel (3) umschließende Blende (12) angeordnet ist.

2. Bildumkehrsystem nach Anspruch 1, **dadurch gekennzeichnet, dass** das der Objektabbildung dienende Lichtbündel (3) durch eine senkrecht zur optischen Achse (2) stehende und dem Planspiegel (1) vorangestellte erste Blende (4) begrenzt ist.

3. Bildumkehrsystem nach Anspruch 1, **dadurch gekennzeichnet, dass** die Basisfläche (7) des Dachkantprismas (5) im Bereich (8) des nach Reflexion am Planspiegel (1) in das Dachkantprisma (5) eintretenden Strahlenbündels (3) durch eine zweite Blende (9) begrenzt ist.

4. Bildumkehrsystem nach einem der Ansprüche 1 bis 3, **dadurch gekennzeichnet, dass** die Öffnung der Blende (12) ein an der Planspiegelfläche abgeschnittenes Oval bildet.

5. Bildumkehrsystem nach einem der Ansprüche 1 bis 4, **dadurch gekennzeichnet, dass** die Blende (12) an der Stelle der engsten Einschnürung (10) der einfallenden und ausfallenden Lichtbündel (3) angeordnet ist.

## Claims

1. Image reversing system for insertion into the imaging beam path between an objective lens and an eyepiece, wherein the image reversing system consists of, in the light direction, a plane mirror (1) located obliquely in the imaging beam path and a roof prism (5), **characterized in that** an aperture stop (12) is arranged perpendicular on the plane mirror surface and encloses the light beams (3), which are incident on the plane mirror (1) in the region of the mutually intersecting light beams (3) and exit after reflection.

2. Image reversing system according to Claim 1, **characterized in that** the light beam (3) serving for object imaging is limited by a first aperture stop (4) which is arranged perpendicular to the optical axis (2) and upstream of the plane mirror (1).

3. Image reversing system according to Claim 1, **characterized in that** the base surface (7) of the roof prism (5) is limited in the region (8) of the bundle of rays (3) entering the roof prism (5) after reflection at the plane mirror (1) by a second aperture stop (9).

4. Image reversing system according to one of Claims 1 to 3, **characterized in that** the opening of the aperture stop (12) forms an oval which is cut off at the plane mirror surface.

5. Image reversing system according to one of Claims 1 to 4, **characterized in that** the aperture stop (12) is arranged at the site of the narrowest constriction (10) of the incident and exiting light beams (3).

## Revendications

1. Système de redressement d'image destiné à être inséré dans le trajet du rayon de représentation entre un objectif et un oculaire, le système de redressement d'image, dans le sens de la lumière, se composant d'un miroir plan (1) disposé en biais dans le trajet du rayon de représentation et d'un prisme triangulaire (5), **caractérisé en ce qu'**un diaphragme (12) placé perpendiculairement sur la surface du miroir plan et entourant les faisceaux lumineux (3) est disposé sur le miroir plan (1) dans la zone des faisceaux lumineux (3) du trajet du rayon de représentation incidents qui s'entrecroisent et qui émergent après réflexion.

2. Système de redressement d'image selon la revendication 1, **caractérisé en ce que** le faisceau lumineux (3) servant à la représentation de l'objet est délimité par un premier diaphragme (4) placé perpendiculairement à l'axe optique (2) et se trouvant devant le miroir plan (1).

3. Système de redressement d'image selon la revendication 1, **caractérisé en ce que** la surface de base (7) du prisme triangulaire (5) est délimitée par un deuxième diaphragme (9) dans la zone (8) du faisceau lumineux (3) qui pénètre dans le prisme triangulaire (5) après réflexion sur le miroir plan (1).

4. Système de redressement d'image selon l'une des revendications 1 à 3, **caractérisé en ce que** l'ouverture du diaphragme (12) forme un ovale découpé au contour de la surface du miroir plan.

5. Système de redressement d'image selon l'une des revendications 1 à 4, **caractérisé en ce que** le diaphragme (12) est disposé à l'endroit du rétrécissement (10) le plus étroit des faisceaux lumineux (3) incidents et émergents.
